# EUROPEAN PATENT SPECIFICATION

(11) **EP 2 711 241 B1**
(45) Date of publication and mention of the grant of the patent: **30.03.2016**
(21) Application number: 13184879.8
(22) Date of filing: 18.09.2013
(51) Int. Cl.: B60N 2/225

(54) **Reclining device**
Rücklehnvorrichtung
Dispositif d'inclinaison

(30) Priority: 19.09.2012 JP 2012205148
(43) Date of publication of application: 26.03.2014
(73) Proprietor: Delta Kogyo Co., Ltd., Aki-gun, Hiroshima (JP)
(72) Inventor: Oki, Yasukazu, Hiroshima (JP)
(74) Representative: Rupprecht, Kay

(56) References cited:
- DE-A1- 10 134 355
- DE-A1- 19 500 914
- DE-U1-202007 018 409
- JP-A- 2011 078 513
- US-A1- 2004 258 101

## Description

### TECHNICAL FIELD

The present invention relates to a reclining device for adjusting the backward tilting angle of a seat back relative to a seat cushion.

### BACKGROUND ART

Japanese Examined Patent Publication No. S63-47443 (JPS6347443B) discloses one conventional reclining device installed in a vehicle seat.

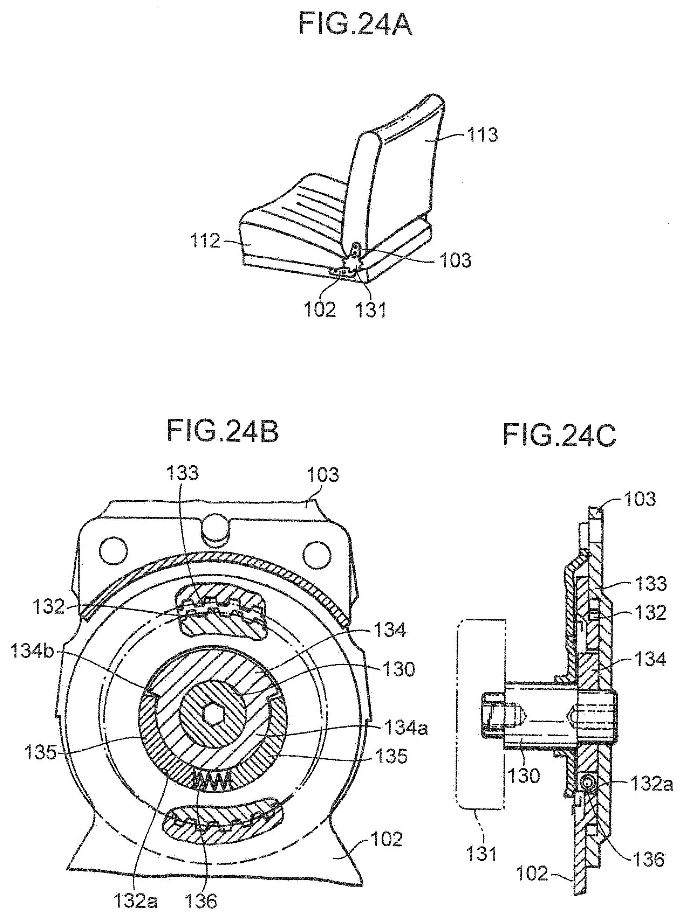

This reclining device includes, as shown in FIG. 24A, a first bracket 102 attached to a seat cushion 112 and a second bracket 103 attached to a seat back 113. Rotating an operation shaft 130 to be described later via a handle 131 adjusts the attachment angle of the second bracket 103 relative to the first bracket 102, i.e., the backward tilting angle of the seat back 113.

More specifically, as shown in FIGS. 24B and 24C, the first bracket 102 has integrally formed outer teeth 132, while the second bracket 103 has integrally formed inner teeth 133 with a larger number of teeth than the outer teeth 132.

The first bracket 102 has a large-diameter hole 132a in a region radially inside of the outer teeth 132. The second bracket 103 supports the operation shaft 130 in a region radially inside of the inner teeth 133. A link plate 134 having a small-diameter part 134a and a large-diameter part 134b is fixed to this operation shaft 130. Between the large-diameter hole 132a of the first bracket 102 and the small-diameter part 134a of the link plate 134 are fitted a pair of wedge members 135 for causing the outer teeth 132 to mesh with the inner teeth 133, with their centers being offset from each other (eccentrically).

When the operation shaft 130 is rotated via the handle 131, the large-diameter part 134b of the link plate 134 pushes and moves the wedge members 135, and with this, the eccentric position of the inner teeth 133 relative to the outer teeth 132 is changed. The inner teeth 133 thus changes its position where it meshes with the outer teeth 132 so that the attachment angle of the second bracket 103 relative to the first bracket 102 is adjusted.

A spring 136 is disposed between the pair of wedge members 135 to urge the wedge members 135 against both of the surrounding surface of the large-diameter hole 132a and the outer circumferential surface of the small-diameter part 134a. However, when the seat back 113 is subjected to repeated load and vibration, the wedge members 135 may displace, causing the operation shaft 130 to rotate little by little, so that the seat back 113 may gradually tilt backward.

Japanese Utility Model Application Publication No. S62-177338 (JPS62177338U) discloses a technique for dealing with this problem. In the reclining device disclosed in this document, a brake drum is attached such as to cover the operation shaft 130. Inside the brake drum is fitted a torsion spring in a compressed state, and the operation shaft 130 is engaged with this torsion spring, so as to prevent gradual tilting of the seat back 113.

However, in such a design with a torsion spring fitted inside a brake drum as described in Japanese Utility Model Application Publication No. S62-177338, the structure is complex and requires a large number of components, because of which the cost is also high.

Japanese Examined Patent Publication No. 2011 078513 (JP2011078513A) relates to a vehicle seat provided with an angle adjusting device according to the preamble of claim 1.

### SUMMARY OF THE INVENTION

The present invention was made to solve the problem described above, its object being to provide a reclining device that can prevent backward displacement of the seat back with a very simple and low-cost structure.

To achieve the above object, the present invention provides a reclining device including: a first bracket fixed to a seat cushion and having a predetermined number of outer teeth; a second bracket fixed to a seat back and having inner teeth in a larger number than the outer teeth to partially mesh with the outer teeth; a restriction member that restricts rotation of the second bracket in a specified direction and a counter direction, with the specified direction being a direction in which the second bracket rotates relative to the first bracket when the seat back is tilted backward and the counter direction being a direction in which the rotation opposite thereto is implemented; and an operation member releasing the second bracket from restriction by the restriction member and allowing the second bracket to rotate in the specified direction or counter direction, thereby adjusting an attachment angle of the second bracket relative to the first bracket, the first bracket having a circular large-diameter hole concentric with the outer teeth, the second bracket having a small-diameter shaft concentric with the inner teeth and fitted in the large-diameter hole, an eccentric cavity with an uneven radial gap formed between a surrounding surface of the large-diameter hole of the first bracket and an outer circumferential surface of the small-diameter shaft of the second bracket; the restriction member being a pair of wedge members provided at two circumferential locations in the eccentric cavity, with a spring member being engaged with the pair of wedge members to urge both wedge members in biting directions, the operation member pushing the pair of wedge members and the spring member in the specified direction or counter direction to impart an eccentric motion to the small-diameter shaft in the large-diameter hole and to change a mating position between the outer teeth and inner teeth, thereby adjusting the attachment angle of the second bracket; and a rolling member provided in the eccentric cavity and stopping the second bracket from rotating in the specified direction when a force is applied to the seat back in a backward tilting direction, by abutting on at least one of the surrounding surface of the large-diameter hole and the outer circumferential surface of the small-diameter shaft.

According to the present invention, when a rotational force is applied in the specified direction to the second bracket in accordance with the force applied to the seat back in the backward tilting direction, the rolling member provided inside the eccentric cavity abuts on at least one of the surrounding surface of the large-diameter hole and the outer circumferential surface of the small-diameter shaft, whereby rotation of the second bracket in the specified direction is stopped. In this way, rotation of the second bracket is stopped only by providing the rolling member in the eccentric cavity, so that gradual displacement of the seat back in the backward tilting direction is prevented with a very simple and low-cost structure.

In the present invention, preferably, the operation member includes a base part formed with a cut-out for accommodating the rolling member, and a protrusion protruding from the base part and arranged between ends in the biting directions of the pair of wedge members, the cut-out has a circumferential wall formed with a first wall pushing the rolling member in the specified direction when the operation member is rotated in the specified direction, and a second wall pushing the rolling member in the counter direction when the operation member is rotated in the counter direction, at least one of the pair of wedge members located closer to an end in the specified direction of the protrusion has a slope at one end in a loosening direction, the rolling member is arranged between ends in loosening directions of the pair of wedge members, and is pushed up by the slope of the wedge member when a force is applied to the seat back in the backward tilting direction, then pressed against the surrounding surface of the large-diameter hole, thereby stopping rotation of the second bracket in the specified direction, and the protrusion, the cut-out, and the rolling member are positioned such that, when the operation member is rotated in the specified direction, the first wall of the cut-out abuts on the rolling member before the protrusion abuts on one of the pair of wedge members, and when the operation member is rotated in the counter direction, the second wall of the cut-out abuts on the rolling member after the protrusion has abutted on the other of the pair of wedge members.

Since the rolling member is provided inside the cut-out formed in the base part of the operation member, the position of the rolling member can be correctly controlled as it is linked with the rotation of the operation member.

For example, when the operation member is rotated in the specified direction, the first wall of the cut-out abuts on the rolling member before the protrusion abuts on one of the wedge members. Therefore, the one wedge member is pushed after the rotation lock by the rolling member has been released, so that the operation member can be rotated smoothly in the specified direction, meaning that the seat back can be displaced backward without any hindrance.

When the operation member is rotated in the counter direction, the second wall of the cut-out abuts on the rolling member after the protrusion has abutted on the other wedge member. Therefore, the rolling member moves after the rotation lock by the other wedge member has been released, so that the operation member can be rotated smoothly in the counter direction, meaning that the seat back can be displaced forward without any hindrance.

In the structure described above, more preferably, a biasing spring may be provided between the rolling member and one end of the wedge member located on the side in the specified direction of the rolling member for urging and pressing the rolling member against the slope.

With such a structure, the biasing spring keeps the rolling member pressed against the slope of the wedge member, so that, even when the seat is oriented to lean down backward, the second bracket is reliably prevented from rotating in the specified direction by the rolling member, which prevents gradual backward displacement of the seat back more effectively.

The operation member includes a base part, a first protrusion protruding from the base part, and a second protrusion spaced away from the first protrusion in the specified direction, the first protrusion and second protrusion are arranged between ends in the biting directions of the pair of wedge members, the rolling member is accommodated in a gap between the first protrusion and second protrusion and stops the second bracket from rotating in the specified direction when a force is applied to the seat back in the backward tilting direction, by abutting on both of the surrounding surface of the large-diameter hole and the outer circumferential surface of the small-diameter shaft, and the first and second protrusions, and the rolling member are positioned such that, when the operation member is rotated in the specified direction, the first protrusion abuts on the rolling member before the second protrusion abuts on one of the pair of wedge members, and when the operation member is rotated in the counter direction, the second protrusion abuts on the rolling member after the first protrusion has abutted on the other of the pair of wedge members.

Since the rolling member is provided inside the gap between the first protrusion and the second protrusion of the operation member, the position of the rolling member can be correctly controlled as it is linked with the rotation of the operation member.

For example, when the operation member is rotated in the specified direction, the first protrusion abuts on the rolling member before the second protrusion abuts on one of the wedge members. Therefore, the one wedge member is pushed after the rotation lock by the rolling member has been released, so that the operation member can be rotated smoothly in the specified direction, meaning that the seat back can be displaced backward without any hindrance.

When the operation member is rotated in the counter direction, the second protrusion abuts on the rolling member after the first protrusion has abutted on the other wedge member. Therefore, the rolling member moves after the rotation lock by the other wedge member has been released, so that the operation member can be rotated smoothly in the counter direction, meaning that the seat back can be displaced forward without any hindrance.

In the structure described above, a biasing spring may be provided between one wedge member located closer to the second protrusion and the rolling member for urging the rolling member in a direction away from the wedge member.

With such a configuration, the biasing spring keeps the rolling member pressed against both of the surrounding surface of the large-diameter hole and the outer circumferential surface of the small-diameter shaft, so that, even when the seat is oriented to lean down forward, the second bracket is reliably prevented from rotating in the specified direction by the rolling member, which prevents gradual backward displacement of the seat back more effectively.

As described above, according to the reclining device of the present invention, gradual displacement of the seat back in the backward tilting direction is prevented with a very simple and low-cost structure in which a rolling member is provided in the eccentric cavity.

### BRIEF DESCRIPTION OF THE DRAWINGS

FIG. 1 is a side view showing one example of a vehicle seat to which the reclining device of the present invention is applied;
FIG. 2 is an exploded perspective view of the reclining device according to a first embodiment of the present invention;
FIG. 3A is a front view, FIG. 3B is a cross-sectional view along the line B-B in FIG. 3A, and FIG. 3C is a cross-sectional view along the line C-C in FIG. 3A, showing the reclining device in an assembled state;
FIG. 4 is a perspective view showing a first gear member and an operation member and the like taken out from the reclining device and assembled to each other;
FIG. 5 is a front view of major parts of the reclining device;
FIG. 6 is a front cross-sectional view of major parts of the reclining device;
FIG. 7 is a front cross-sectional view of a state when the operation member is rotated in a direction in which the seat back is tilted backward (specified direction);
FIGS. 8A and 8B are perspective views showing the operation member alone;
FIGS. 9A and 9B are diagrams for explaining the behavior of the device when the operation member is rotated in a direction in which the seat back is tilted backward (specified direction);
FIGS. 10A and 10B are diagrams for explaining the behavior of the device when the operation member is rotated in a direction in which the seat back is tilted forward (counter direction);
FIG. 11 is an exploded perspective view showing a variation example of the first embodiment;
FIG. 12 is a view corresponding to FIG. 4 of the variation example;
FIG. 13 is a view corresponding to FIG. 6 of the variation example;
FIG. 14 is an exploded perspective view of the reclining device according to a second embodiment of the present invention;
FIG. 15A is a front view, FIG. 15B is a cross-sectional view along the line B-B in FIG. 15A, and FIG. 15C is a cross-sectional view along the line C-C in FIG. 15A, showing the reclining device in an assembled state;
FIG. 16 is a front view of major parts of the reclining device;
FIG. 17 is a front cross-sectional view of major parts of the reclining device;
FIG. 18 is a partially cut-away cross-sectional view of major parts of the reclining device;
FIGS. 19A and 19B are perspective views showing the operation member alone of the reclining device;
FIGS. 20A and 20B are diagrams for explaining the behavior of the device when the operation member is rotated in a direction in which the seat back is tilted backward (specified direction);
FIGS. 21A and 21B are diagrams for explaining the behavior of the device when the operation member is rotated in a direction in which the seat back is tilted forward (counter direction);
FIG. 22 is an exploded perspective view showing a variation example of the second embodiment;
FIG. 23 is a view corresponding to FIG. 17 of the variation example; and
FIGS. 24A to 24C are diagrams for describing a conventional reclining device.

### DESCRIPTION OF THE PREFERRED EMBODIMENTS

Hereinafter, embodiments of the present invention will be described in detail with reference to the drawings.

### (First Embodiment)

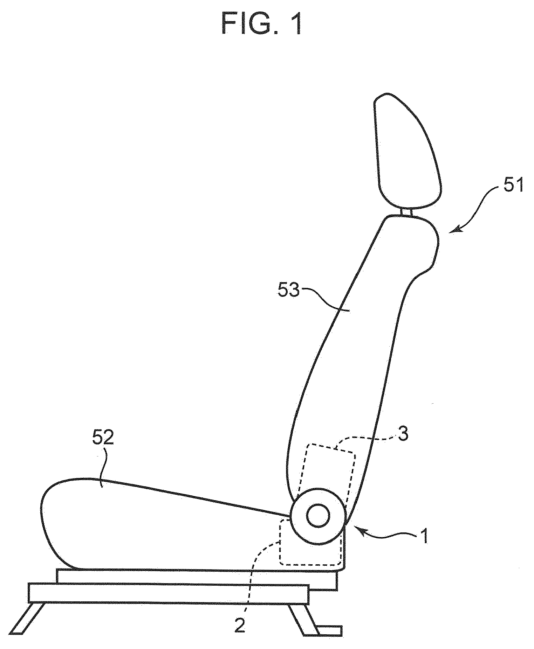

As shown in FIG. 1, the reclining device 1 according to a first embodiment of the present invention is applied to a vehicle seat 51 having a seat cushion 52 and a seat back 53.

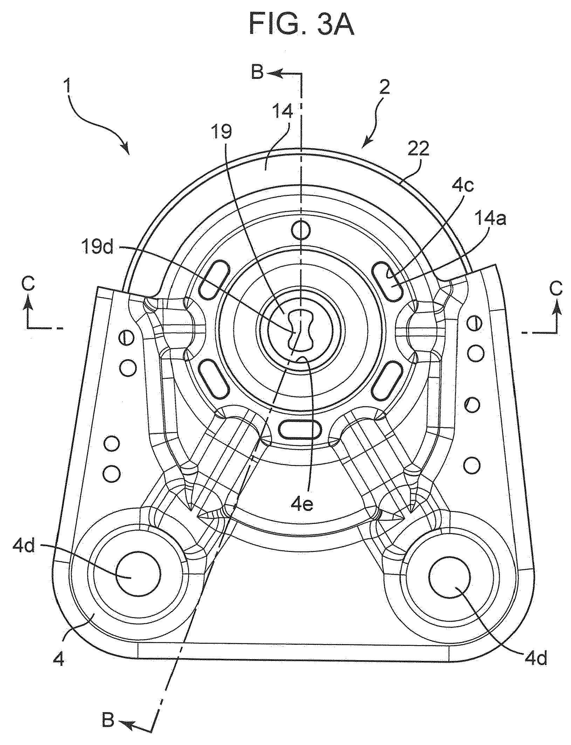

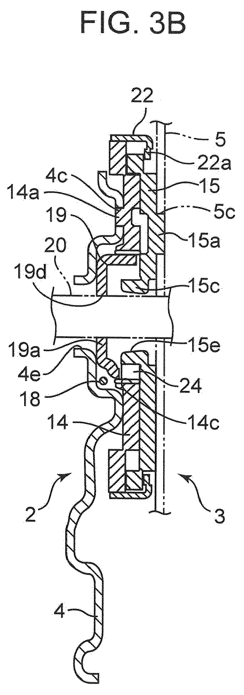

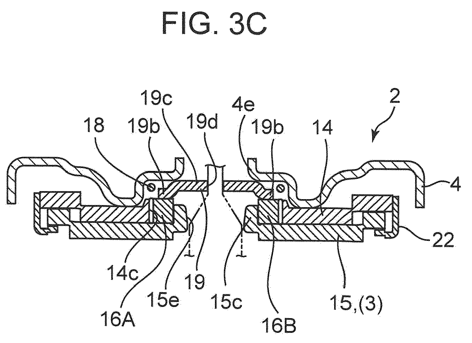

The reclining device 1 includes, as shown in FIG. 1, FIG. 2, and FIGS. 3A to 3C, a first bracket 2 fixed to the seat cushion 52 with bolts (not shown) passed through bolt holes 4d, a second bracket 3 fixed to the seat back 53 by joining means such as welding, a pair of wedge members 16A and 16B as a restriction member that restricts rotation of the second bracket 3 relative to the first bracket 2, an operation member 19 that releases the second bracket 3 from the restriction by the wedge members 16A and 16B (restriction member) to allow the second bracket 3 to rotate so that the attachment angle of the second bracket 3 relative to the first bracket 2 (i.e., backward tilting angle of the seat back relative to the seat cushion 52) is adjusted, and an operation shaft 20 for rotating the operation member 19. The first and second brackets 2 and 3, wedge members 16A and 16B, operation member 19, and other components are provided on both left and right sides of the vehicle seat 51.

The first bracket 2 has a bracket body 4 and a ring-like first gear member 14 fixed to the bracket body 4. The first gear member 14 is formed with a plurality of outer teeth 14b on the outer circumferential surface of a raised portion of a main part of a disc-like plate (other than the rim) that is formed by press-forming. On one side of the first gear member 14 are formed a plurality of protrusions 14a, which each fit in the same number of positioning holes 4c in the bracket body 4. The first gear member 14 is positioned relative to the bracket body 4 by this engagement, and fixed to the bracket body 4 by joining means such as welding.

The second bracket 3 has a bracket body 5 and a ring-like second gear member 15 fixed to the bracket body 5. The second gear member 15 is formed with a plurality of inner teeth 15b on the inner circumferential surface of a recessed portion of a main part of a disc-like plate (other than the rim) that is formed by press-forming. On one side of the second gear member 15 are formed a plurality of protrusions 15a, which each fit in the same number of positioning holes 5c in the second bracket 3. The second gear member 15 is positioned relative to the bracket body 5 by this engagement, and fixed to the second bracket 3 by joining means such as welding.

Note, as with the technique described in the Background Art, the first bracket may be formed as an integral plate-like member having outer teeth on the outer circumferential surface of a raised portion that is formed by press-forming, and the second bracket may be formed as a part of an integral plate-like member having inner teeth on the inner circumferential surface of a recessed portion that is formed by press-forming.

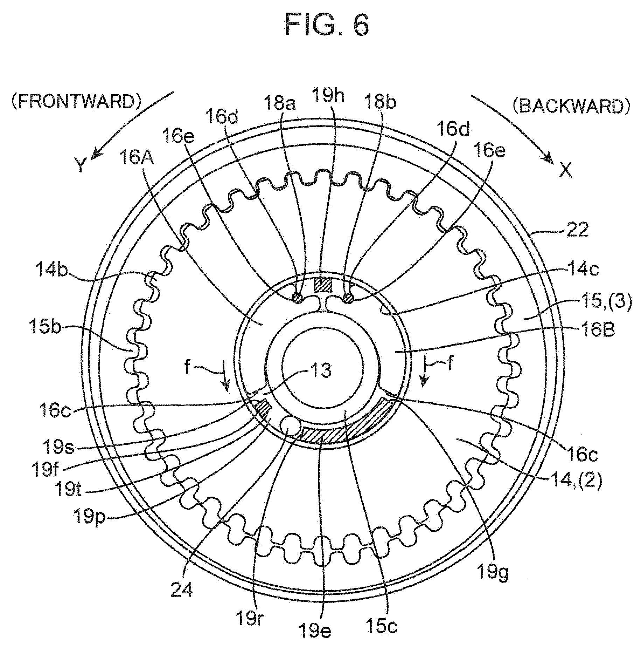

As shown in FIG. 6, the number of the inner teeth 15b on the second gear member 15 of the second bracket 3 is larger than the number of the outer teeth 14b on the first gear member 14 of the first bracket 2. For example, the inner teeth 15b have one more tooth than the outer teeth 14b.

The first gear member 14 has a circular, large-diameter hole 14c concentric with the pitch circle of the outer teeth 14b in a region radially inside of the outer teeth 14b. The second gear member 15 has a small-diameter shaft 15c that is a cylindrical projection concentric with the pitch circle of the inner teeth 15b in a region radially inside of the inner teeth 15b. The bracket body 4 of the first bracket 2 has a hole 4e corresponding to the large-diameter hole 14c of the first gear member 14. The bracket body 5 of the second bracket 3 has a hole 5a corresponding to the small-diameter shaft 15c of the second gear member 15.

The first gear member 14 has a slightly larger outer diameter than that of the second gear member 15. On the other hand, the pitch circle diameter of the outer teeth 14b of the first gear member 14 is slightly smaller than that of the inner teeth 15b of the second gear member 15.

The first gear member 14 and the second gear member 15 are stacked upon one another, with their sides respectively formed with the outer teeth 14b and the inner teeth 15b abutting each other. Thus the outer teeth 14b of the first gear member 14 fit in the recess of the second gear member 15 (space surrounded by the inner teeth 15b), and the outer teeth 14b and the inner teeth 15b partially mesh with each other. The first gear member 14 and the second gear member 15 thus stacked upon one another in their thickness direction are accommodated inside a retainer ring 22.

The retainer ring 22 is a ring-like member having an inner diameter that is substantially the same as the outer diameter of the first gear member 14. The first gear member 14 is press-fitted into the retainer ring 22 so that the outer circumferential surface of the gear makes pressure contact with the inner circumferential surface of the ring and thus the first gear member 14 is fixed inside the retainer ring 22. On the inner surface at one end in the thickness direction of the retainer ring 22 is a supporting edge portion 22a slightly protruding radially inward. The second gear member 15 is retained inside the retainer ring 22 by being held between the first gear member 14 and the supporting edge portion 22a of the retainer ring 22. However, since the outer diameter of the second gear member 15 is smaller than the inner diameter of the retainer ring 22, the second gear member 15 can rotate inside the retainer ring 22.

As described above, the first gear member 14 and the second gear member 15 are retained inside the retainer ring 22 such that the second gear member 15 can rotate relative to the first gear member 14.

When the first gear member 14 and the second gear member 15 are assembled into the retainer ring 22, the small-diameter shaft 15c of the second gear member 15 fits into the large-diameter hole 14c of the first gear member 14. In this state, there is formed an eccentric cavity 13 having an uneven radial gap (in which the radial gap size is different depending on the circumferential position) between the surrounding surface of the large-diameter hole 14c and the outer circumferential surface of the small-diameter shaft 15c.

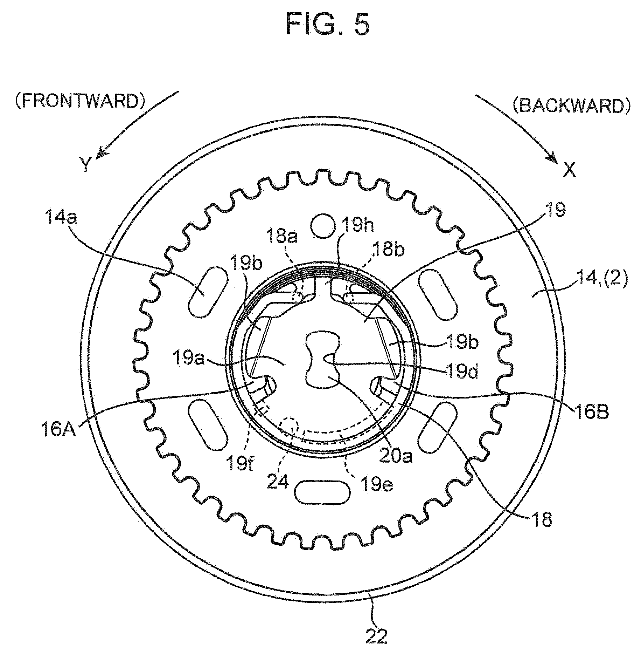

The pair of wedge members 16A and 16B (restriction member) are fitted in the eccentric cavity 13. One of the wedge members 16A on the left side in the drawing (front side of the seat 51) restricts rotation of the second bracket 3 including the second gear member 15 in a direction corresponding to the backward tilting direction of the seat back 53 (direction of arrow X in FIG. 5 and FIG. 6). The wedge member 16B on the right side in the drawing (rear side of the seat 51) restricts rotation of the second bracket 3 including the second gear member 15 in a direction corresponding to the forward tilting direction of the seat back 53 (direction of arrow Y in FIG. 5 and FIG. 6). Hereinafter, the direction of rotation denoted by arrow X, i.e., the direction in which the second gear member 15 rotates when the seat back 53 is tilted backward, will be referred to as "specified direction", and the opposite direction of rotation denoted by arrow Y (the direction in which the second gear member 15 rotates when the seat back 53 is tilted forward) will be referred to as "counter direction".

As shown in FIG. 6, the pair of wedge members 16A and 16B each have an arcuate outer circumferential surface conforming to the surrounding surface of the large-diameter hole 14c of the first gear member 14 and an arcuate inner circumferential surface conforming to the outer circumferential surface of the small-diameter shaft 15c of the second gear member 15. Therefore, the wedge member 16A has an increasing thickness (radial size) in the specified direction X, while the wedge member 16B has an increasing thickness (radial size) in the counter direction Y. Hereinafter, the narrower end (one end in the counter direction Y) of the wedge member 16A will be referred to as "distal end 16c", and the wider end (the other end in the specified direction X) will be referred to as "base end 16d". Similarly, the narrower end (one end in the specified direction X) of the wedge member 16B will be referred to as "distal end 16c", and the wider end (the other end in the counter direction Y) will be referred to as "base end 16d".

Between the pair of wedge members 16A and 16B is provided a ring-like spring member 18 having substantially the same diameter as the large-diameter hole 14c of the first gear member 14. The spring member 18 is an open ring and has two ends 18a and 18b. One end 18a of the spring member 18 engages with a dent 16e in the base end 16d of the wedge member 16A, while the other end 18b of the spring member 18 engages with a dent 16e in the base end 16d of the wedge member 16B. The spring member 18 thus urges the wedge members 16A and 16B in directions away from each other inside the eccentric cavity 13, i.e., pushing the wedge members 16A and 16B toward their respective distal ends 16c. Hereinafter, the urging directions of this spring member 18 (directions denoted by arrows f) may sometimes be referred to specifically as "biting direction(s)".

When the wedge members 16A and 16B are urged by the spring member 18 in the biting directions f, their respective arcuate surfaces on the outer and inner circumferences are pressed against the surrounding surface of the large-diameter hole 14c and the outer circumferential surface of the small-diameter shaft 15c, respectively. This restricts the small-diameter shaft 15c from rotating inside the large-diameter hole 14c, so that the second gear member 15 is retained in a state in which it cannot rotate in either of the specified direction X and the counter direction Y.

The operation member 19, when rotated by the operation shaft 20 either in the specified direction X or the counter direction Y, pushes and moves the pair of wedge members 16A and 16B and the spring member 18, to release the rotation lock achieved by the wedge members 16A and 16B.

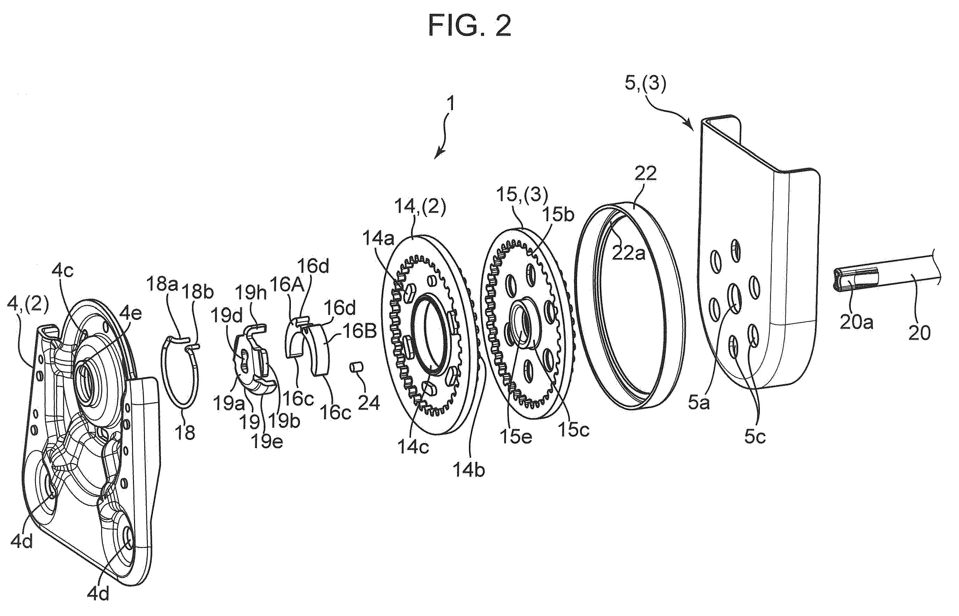

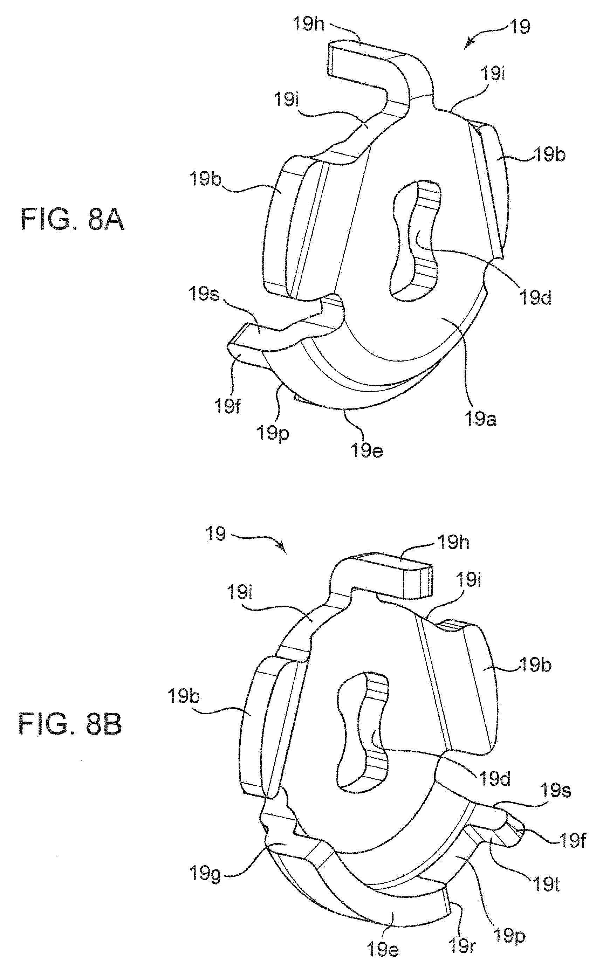

The operation member 19 includes, as shown in FIG. 2 to FIGS. 8A and 8B, a flat plate-like base part 19a disposed between the bracket body 4 of the first bracket 2 and the first gear member 14, and a pair of pressing portions 19b, a first protrusion 19e, a second protrusion 19f, and a third protrusion 19h each formed at respective positions on the rim of the base part 19a. The pair of pressing portions 19b protrude radially outward from two positions on the front side and rear side on the rim of the base part 19a to press down the pair of wedge members 16A and 16B and prevent them from lifting up toward the operation member 19. The first protrusion 19e, second protrusion 19f, and third protrusion 19h protrude from three positions on the rim of the base part 19a toward the first gear member 14 (inward in the width direction of the seat 51), and are each inserted into the eccentric cavity 13 between the surrounding surface of the large-diameter hole 14c and the outer circumferential surface of the small-diameter shaft 15c. The protrusions 19e, 19f, and 19h can move in the circumferential direction inside the eccentric cavity 13 with the rotation of the operation member 19.

In the center of the base part 19a is formed an irregular hole 19d to engage with an irregular part 20a (see FIG. 2) at the tip of the operation shaft 20. On the rim of the base part 19a (between the pressing portions 19b and the third protrusion 19h) are formed clearances 19i to avoid unnecessary interference with the wedge members 16A and 16B. The base part 19a of the operation member 19 abuts on the rim of the hole 4e of the bracket body 4 so that the operation member 19 is positioned in the axial direction of the operation shaft 20.

The first protrusion 19e is formed in an arcuate shape conforming to the surrounding surface of the large-diameter hole 14c of the first gear member 14. The second protrusion 19f is located a distance away from the first protrusion 19e in the specified direction X to form a gap 19p between the first protrusion 19e and the second protrusion 19f.

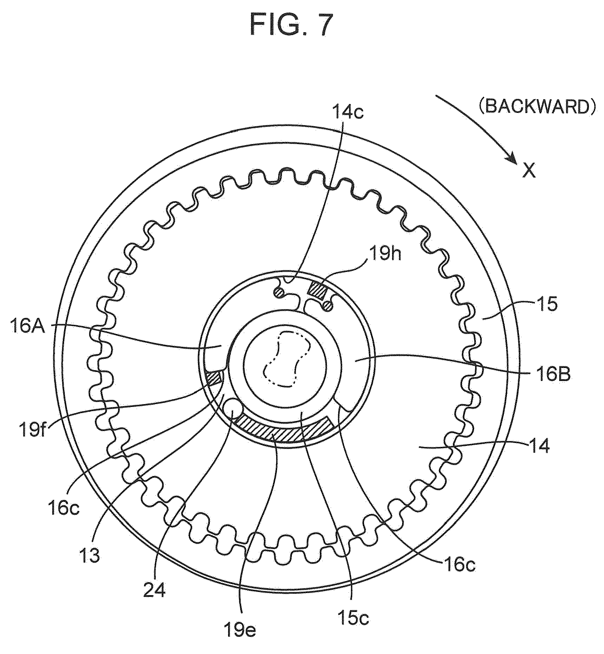

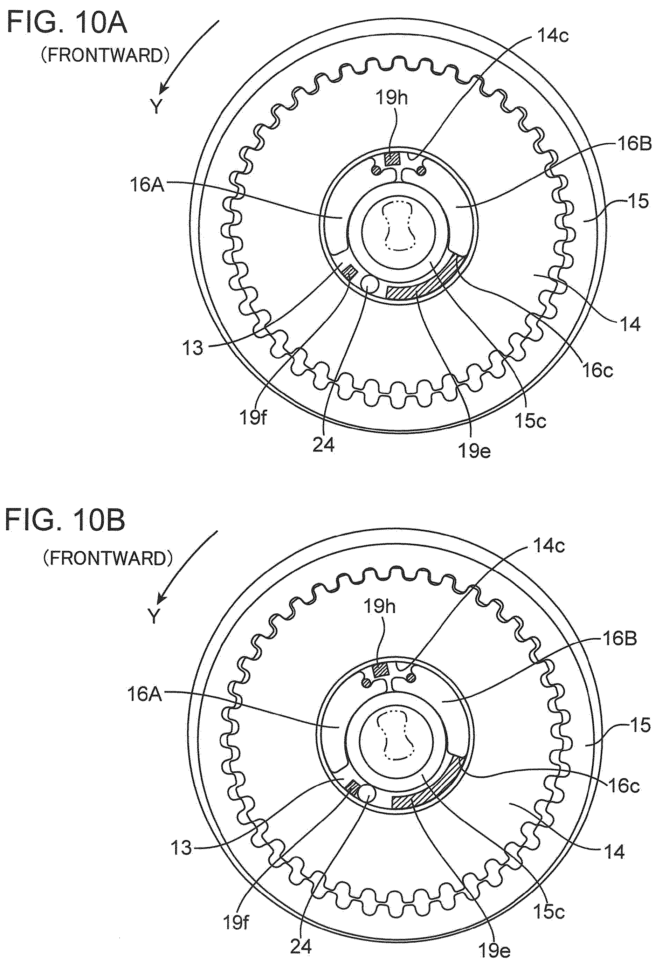

The first protrusion 19e and the second protrusion 19f are arranged between the respective distal ends 16c of the pair of wedge members 16A and 16B (ends in the biting directions f) inside the eccentric cavity 13. Therefore, as shown in FIG. 7, when the operation member 19 is rotated in the specified direction X, the second protrusion 19f abuts on the distal end 16c of the wedge member 16A. Conversely, when the operation member 19 is rotated in the counter direction Y, the first protrusion 19e abuts on the distal end 16c of the wedge member 16B (see FIG. 10B).

The operation shaft 20 extends through the hole 5a in the bracket body 5 and the hole 15e in the small-diameter shaft 15c of the second gear member 15. The irregular part 20a at the tip of the operation shaft 20 is engaged with the irregular hole 19d in the operation member 19. The operation shaft 20 can therefore rotate freely relative to the second bracket 3, rotating the operation member 19 as it turns.

If the reclining device 1 is a manually operated type, the irregular part 20a of the operation shaft 20 is extended in the axial direction, and a handle (similar to the handle 131 of the conventional technique shown in FIG. 24, for example) is attached to this extended portion for manual operation. If the reclining device 1 is an electrically driven type, i.e., if the operation shaft 20 (or the operation member 19) is driven to rotate by an electric motor, the operation shaft 20 may be provided with a link part at a suitable position to be connected with the electric motor.

When the operation shaft 20 is manually or electrically rotated in the specified direction X (in which the seat back is tilted backward), the operation member 19 rotates in the specified direction X as shown in FIG. 7. The second protrusion 19f then abuts on the distal end 16c of the wedge member 16A and pushes the wedge member 16A in the specified direction X.

This movement of the wedge member 16A as it is pushed in the specified direction X releases the rotation lock achieved by the wedge member 16A that restricts rotation of the second gear member 15 in the specified direction X, as well as moves the other wedge member 16B in the specified direction X as it is pushed via the spring member 18. This movement of the wedge member 16B imparts an eccentric rotation motion in the specified direction X of the small-diameter shaft 15c of the second gear member 15 inside the large-diameter hole 14c of the first gear member 14.

In this embodiment, as the operation member 19 is rotated in the specified direction X, the pair of wedge members 16A and 16B are revolved in the specified direction X inside the eccentric cavity 13 together with the spring member 18, which imparts an eccentric motion of the small-diameter shaft 15c inside the large-diameter hole 14c. This allows the inner teeth 15b of the second gear member 15 to change the position where they mesh with the outer teeth 14b of the first gear member 14, so that the attachment angle of the second bracket 3 relative to the first bracket 2 is adjusted, i.e., to increase the backward tilting angle of the seat back 53.

Conversely, when the operation shaft 20 and the operation member 19 are manually or electrically rotated in the counter direction Y (in which the seat back is tilted forward), the first protrusion 19e abuts on the distal end 16c of the wedge member 16B, and pushes the wedge member 16B in the counter direction Y.

This movement of the wedge member 16B as it is pushed in the counter direction Y releases the rotation lock achieved by this wedge member 16B that restricts rotation of the second gear member 15 in the counter direction Y, as well as moves the other wedge member 16A in the counter direction Y as it is pushed via the spring member 18. This movement of the wedge member 16A imparts an eccentric rotation motion in the counter direction Y of the small-diameter shaft 15c of the second gear member 15 inside the large-diameter hole 14c of the first gear member 14.

In this embodiment, as the operation member 19 is rotated in the counter direction Y, the pair of wedge members 16A and 16B are revolved in the counter direction Y inside the eccentric cavity 13 together with the spring member 18, which imparts an eccentric motion of the small-diameter shaft 15c inside the large-diameter hole 14c. This allows the inner teeth 15b of the second gear member 15 to change the position where they mesh with the outer teeth 14b of the first gear member 14, so that the attachment angle of the second bracket 3 relative to the first bracket 2 is adjusted, i.e., to decrease the backward tilting angle of the seat back 53.

In the reclining device 1 of this embodiment, under usual conditions (when the operation shaft 20 is not operated), both wedge members 16A and 16B are pressed by the spring member 18 in the biting directions f so that the inner and outer circumferential surfaces of the wedge members 16A and 16B are kept in contact with the surrounding surface of the large-diameter hole 14c and the outer circumferential surface of the small-diameter shaft 15c. This restricts eccentric motion of the small-diameter shaft 15c inside the large-diameter hole 14c (rotation of the second gear member 15 relative to the first gear member 14), so that the backward tilting angle of the seat back 53 is maintained at the same angle.

However, when the seat back 53 is subjected to repeated load, or the seat 51 undergoes vibration with the driving of the vehicle, the wedge members 16A and 16B may change their positions little by little, (causing the operation shaft 20 to rotate little by little), so that the seat back 53 may gradually displace in the backward tilting direction.

In this embodiment, therefore, a roller (rolling member) 24 is provided inside the eccentric cavity 13 to stop rotation of the second bracket 3 in the specified direction X even when a force is applied to the seat back 53 in the backward tilting direction.

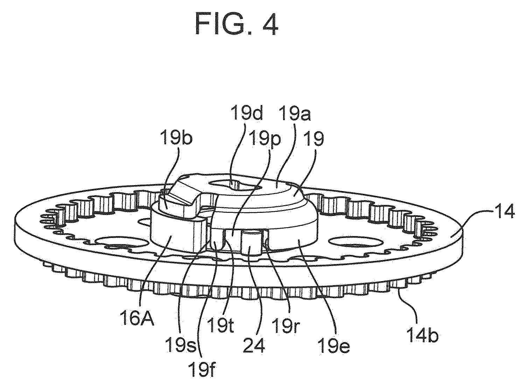

The roller 24 is a columnar component having an outer diameter that is slightly larger than the thicknesses (radial sizes) of the first and second protrusions 19e and 19f of the operation member 19, and accommodated in the gap 19p between the first and second protrusions 19e and 19f as shown in FIG. 4 and FIG. 6. The roller 24 is positioned closer to the first protrusion 19e than to the second protrusion 19f inside the gap 19p under usual conditions. The circumferential surface of the roller 24 makes contact with both of the surrounding surface of the large-diameter hole 14c and the small-diameter shaft 15c so as to stop rotation of the second bracket 3 in the specified direction X. As the component for stopping rotation of the second bracket 3 (rolling member), a spherical component may be provided instead of the columnar roller 24 in this embodiment.

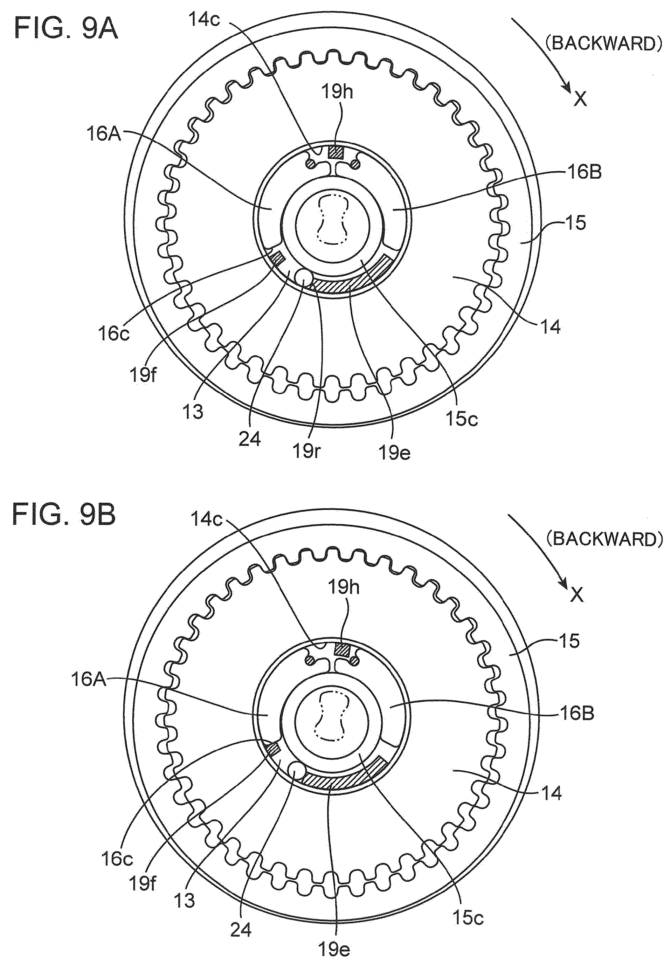

As shown in FIG. 6, the distance from the end 19r in the specified direction X of the first protrusion 19e (one end closer to the second protrusion 19f) to the roller 24 is set smaller than the distance from the end 19s in the specified direction X of the second protrusion 19f (one end closer to the wedge member 16A) to the distal end 16c of the wedge member 16A. Therefore, when the operation member 19 is rotated in the specified direction X by the operation shaft 20, the first protrusion 19e first abuts on the roller 24, after which the second protrusion 19f abuts on the distal end 16c of the wedge member 16A, as shown in FIGS. 9A and 9B. Thus, in this embodiment, the first and second protrusions 19e and 19f, and the roller 24 are positioned such that, when the operation member 19 is rotated in the specified direction X, the first protrusion 19e abuts on the roller 24 before the second protrusion 19f abuts on the wedge member 16A.

The distance from the end 19g in the counter direction Y of the first protrusion 19e (one end closer to the wedge member 16B) to the distal end 16c of the wedge member 16B is set smaller than the distance from the end 19t in the counter direction Y of the second protrusion 19f (one end closer to the first protrusion 19e) to the roller 24. Therefore, when the operation member 19 is rotated in the counter direction Y by the operation shaft 20, the first protrusion 19e first abuts on the distal end 16c of the wedge member 16B, after which the second protrusion 19f abuts on the roller 24, as shown in FIGS. 10A and 10B. Thus, in this embodiment, the first and second protrusions 19e and 19f, and the roller 24 are positioned such that, when the operation member 19 is rotated in the counter direction Y, the second protrusion 19f abuts on the roller 24 after the first protrusion 19e has abutted on the wedge member 16B.

As described above, according to the first embodiment of the present invention, when a rotational force is applied in the specified direction X to the second bracket 3 in accordance with the force applied to the seat back 53 in the backward tilting direction, the roller 24 provided inside the eccentric cavity 13 abuts on both of the surrounding surface of the large-diameter hole 14c and the outer circumferential surface of the small-diameter shaft 15c, whereby rotation of the second bracket 3 in the specified direction X is stopped. In this way, rotation of the second bracket 3 is stopped only by providing the roller 24 in the eccentric cavity 13, so that gradual displacement of the seat back 53 in the backward tilting direction is prevented with a very simple and low-cost structure.

Since the roller 24 is provided inside the gap 19p between the first protrusion 19e and the second protrusion 19f of the operation member 19, the position of the roller 24 can be correctly controlled as it is linked with the rotation of the operation member 19.

For example, as shown in FIGS. 9A and 9B, when the operation member 19 is rotated in the specified direction X, the first protrusion 19e abuts on the roller 24 before the second protrusion 19f abuts on the distal end 16c of the wedge member 16A. Therefore, the wedge member 16A is pushed after the rotation lock by the roller 24 has been released, so that the operation member 19 can be rotated smoothly in the specified direction X, meaning that the seat back 53 can be displaced backward without any hindrance.

When the operation member 19 is rotated in the counter direction Y, as shown in FIGS. 10A and 10B, the second protrusion 19f abuts on the roller 24 after the first protrusion 19e has abutted on the distal end 16c of the wedge member 16B. Therefore, the roller 24 moves after the rotation lock by the wedge member 16B has been released, so that the operation member 19 can be rotated smoothly in the counter direction Y, meaning that the seat back 53 can be displaced forward without any hindrance.

In the first embodiment described above, when the vehicle is going downhill, for example, the vehicle seat 51 is tilted down forward. In this state, there is a possibility that the roller 24 may roll in the specified direction X in which it will not contact either of the surrounding surface of the large-diameter hole 14c and the outer circumferential surface of the small-diameter shaft 15c.

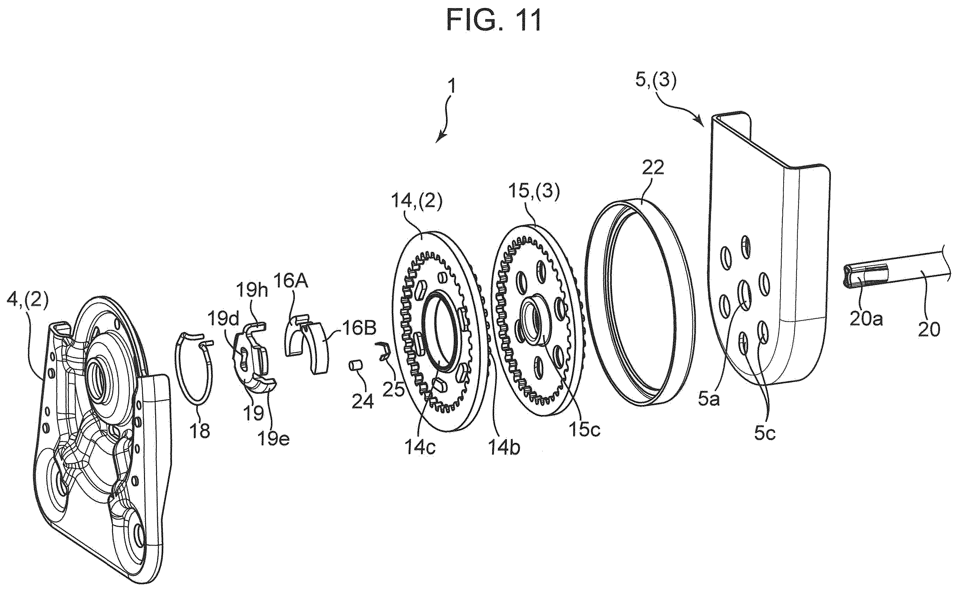

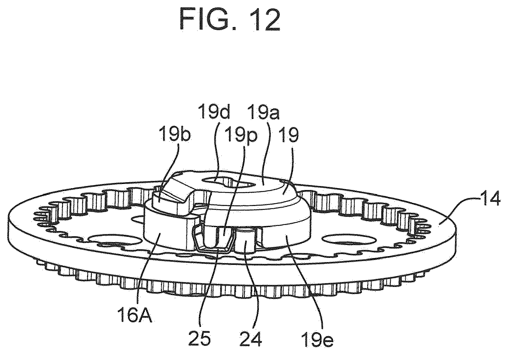

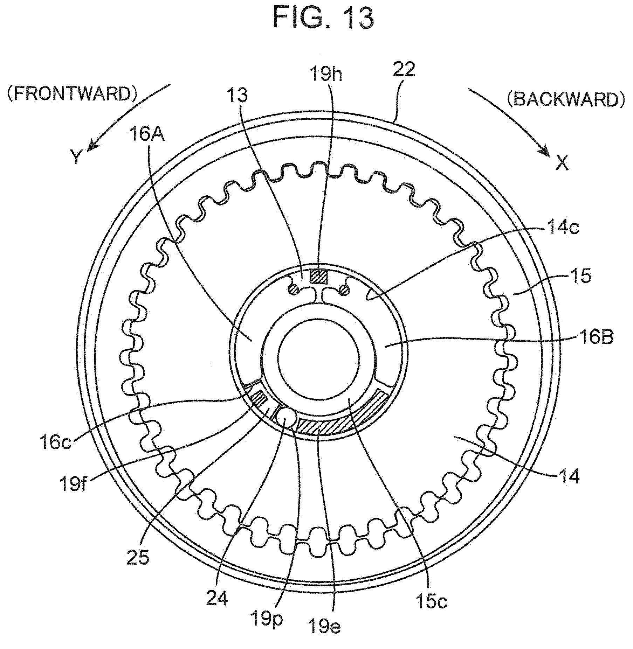

Therefore, as a variation example, as shown in FIG. 11 to FIG. 13, a biasing spring 25 may be provided between the distal end 16c of the wedge member 16A that is the one closer to the second protrusion 19f and the roller 24. This biasing spring 25 is a C-shaped plate spring and provided to urge the roller 24 in a direction in which the roller is moved away from the wedge member 16A, i.e., in the direction in which the roller is pressed against both of the surrounding surface of the large-diameter hole 14c and the outer circumferential surface of the small-diameter shaft 15c (in this case, counter direction Y).

With such a configuration, the biasing spring 25 keeps the roller 24 pressed against both of the surrounding surface of the large-diameter hole 14c and the outer circumferential surface of the small-diameter shaft 15c, so that, even when the vehicle seat 51 is oriented to lean down forward, the second bracket 3 is reliably prevented from rotating in the specified direction X by the roller 24, which prevents gradual backward displacement of the seat back 53 more effectively.

### (Second Embodiment)

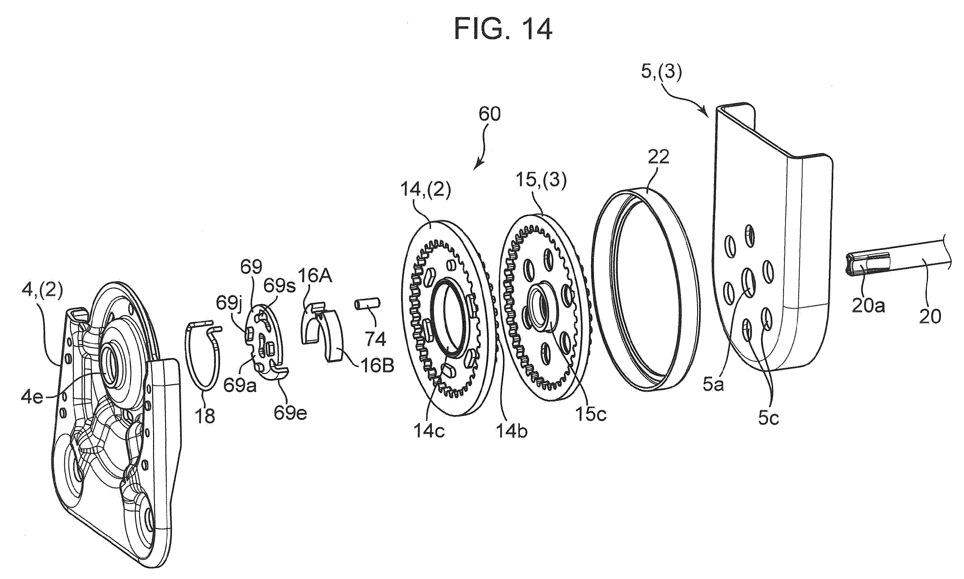

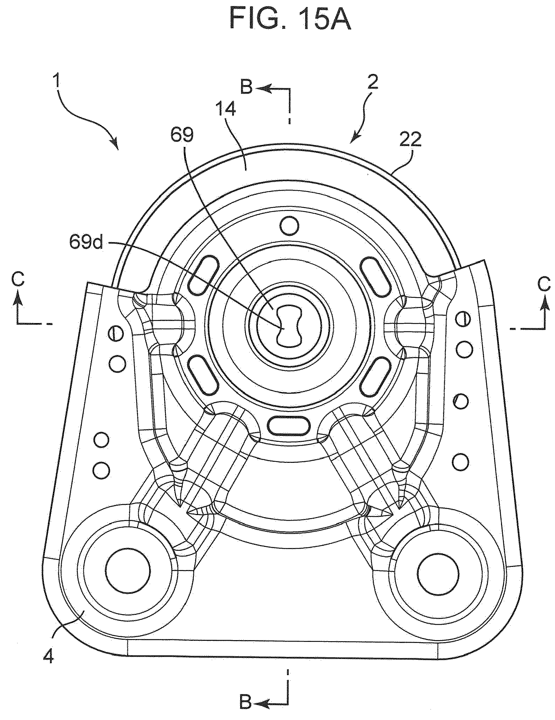

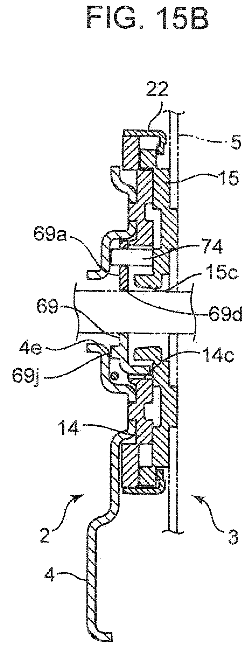

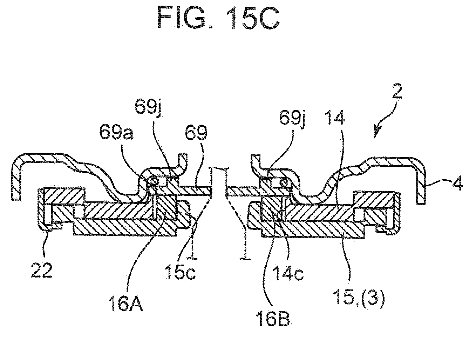

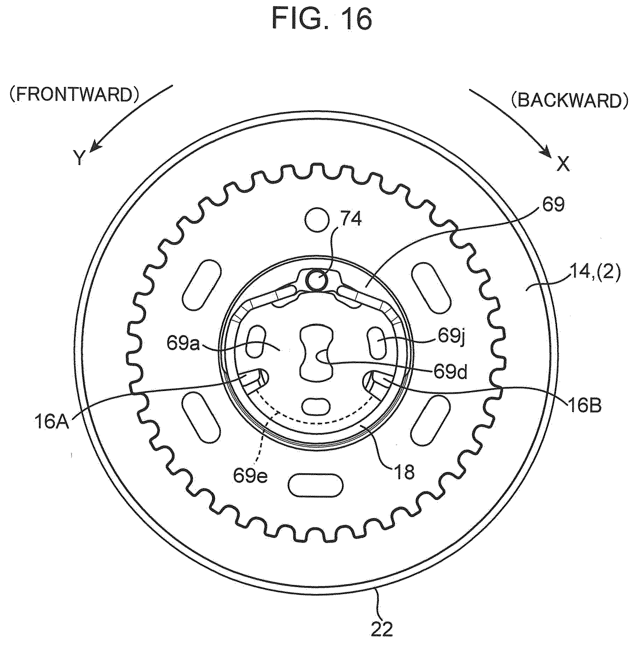

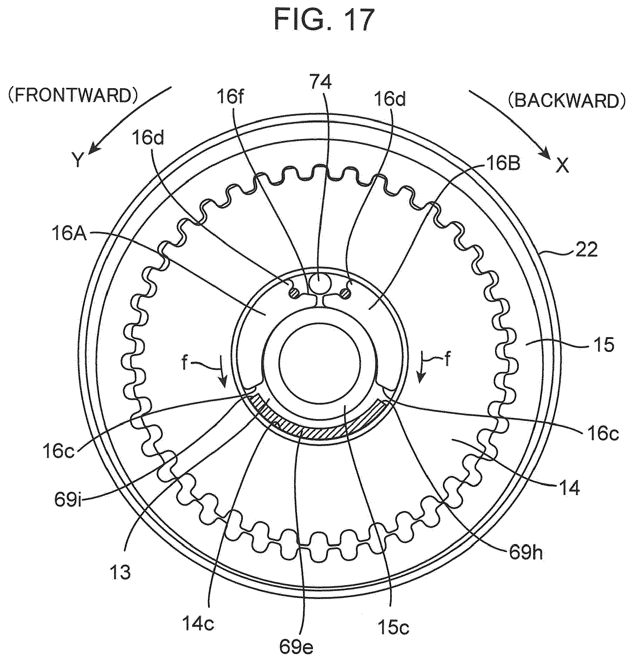

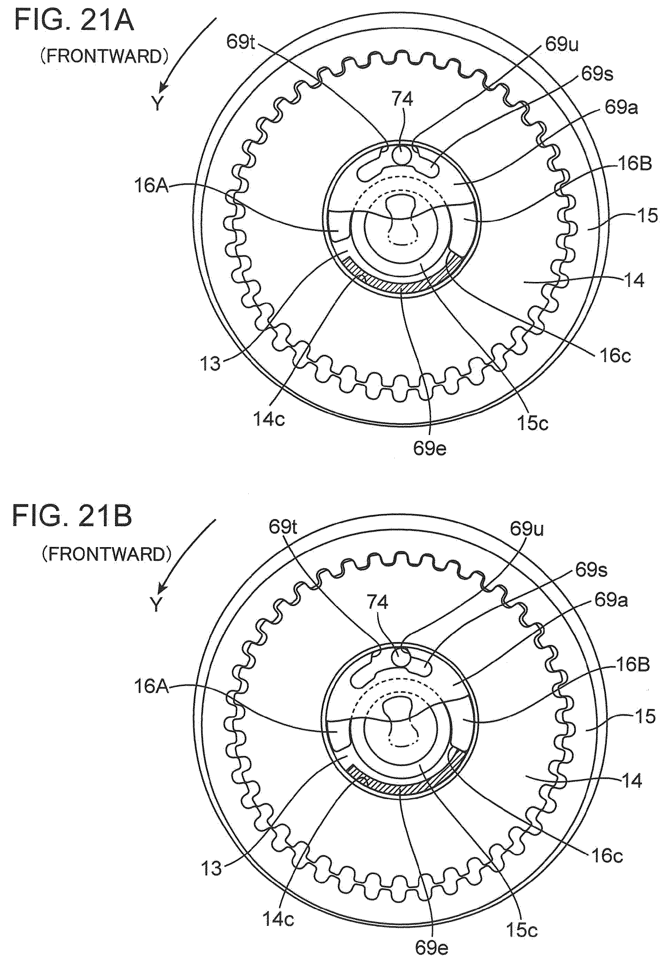

Next, a reclining device 60 according to a second embodiment of the present invention will be described with reference to FIG. 14 to FIGS. 21A and 21B. In the following description, the same elements as those of the first embodiment are given the same reference numerals and will not be described in detail.

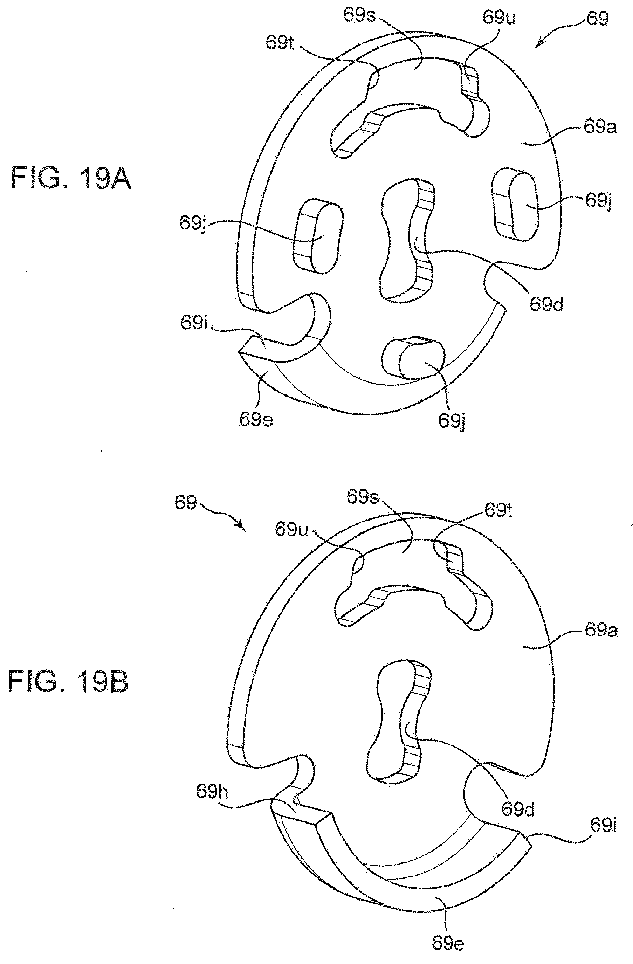

The second embodiment uses an operation member 69 having a different shape from that of the operation member 19 of the first embodiment. The operation member 69 of the second embodiment includes, as shown in FIG. 14 to FIGS. 19A and 19B, a flat plate-like base part 69a, an arcuate protrusion 69e protruding from a lower edge portion of the base part 69a toward the first gear member 14 (inward in the width direction of the seat 51), and projections 69j protruding from the base part 69a on the side of the bracket body 4 (outward in the width direction of the seat 51). A circumferential cut-out 69s is formed in an upper edge portion of the base part 69a, and an irregular hole 69d is formed in the center of the base part 69a, to engage with the irregular part 20a at the tip of the operation shaft 20.

The projections 69j of the operation member 69 abut on the rim of the hole 4e of the bracket body 4 so that the operation member 69 is positioned in the axial direction of the operation shaft 20. The base part 69a of the operation member 69 is positioned closer to the first gear member 14 by the protruding amount of the projections 69j.

The upper half of the base part 69a is substantially semi-circular, with the cut-out 69s formed in this semi-circular part. A roller 74, which is a columnar component having a larger height than that of the previously described roller 24 of the first embodiment, is present in this cut-out 69s. The roller 74 extends through the cut-out 69s and fits into the eccentric cavity 13 between the surrounding surface of the large-diameter hole 14c and the outer circumferential surface of the small-diameter shaft 15c.

The pair of wedge members 16A and 16B are arranged in the eccentric cavity 13. One of the pair of wedge members 16A and 16B that is closer to the end 69i in the specified direction X of the protrusion 69e, i.e., wedge member 16A, has a slightly different shape than that of the first embodiment. More specifically, the wedge member 16A has a slope 16f at the base end 16d that is one end in an opposite direction from the biting direction f (hereinafter referred to as "loosening direction").

The protrusion 69e of the operation member 69 protrudes toward the first gear member 14 and fits in the eccentric cavity 13, and is positioned between the respective distal ends 16c of the pair of wedge members 16A and 16B (ends in the biting directions f). The protrusion 69e can move in the circumferential direction with the rotation of the operation member 69. When the operation member 69 is turned in the specified direction X, the end 69i in the specified direction X of the protrusion 69e abuts on the distal end 16c of the wedge member 16A, while, when the operation member 69 is turned in the counter direction Y, the end 69h in the counter direction Y of the protrusion 69e abuts on the distal end 16c of the wedge member 16B.

The roller 74 is arranged between the respective base ends 16d of the pair of wedge members 16A and 16B (ends in the loosening directions opposite from the biting directions f) inside the eccentric cavity 13. This roller 74 serves to prevent gradual backward displacement of the seat back 53 caused by the load repeatedly applied to the seat back 53 or vibration similarly to the first embodiment.

More specifically, when a rotational force is applied in the specified direction X to the second bracket 3 in accordance with the force applied to the seat back 53 in the backward tilting direction, the roller 74 is pushed up by the slope 16f formed at the base end 16d of the wedge member 16A and abuts on the surrounding surface of the large-diameter hole 14c. This abutment of the roller 74 stops rotation of the second bracket 3 in the specified direction X.

The cut-out 69s has a first wall 69t and a second wall 69u positioned to the front and at the back of the roller 74. The roller 74 is arranged closer to the first wall 69t than to the second wall 69u in the cut-out 69s.

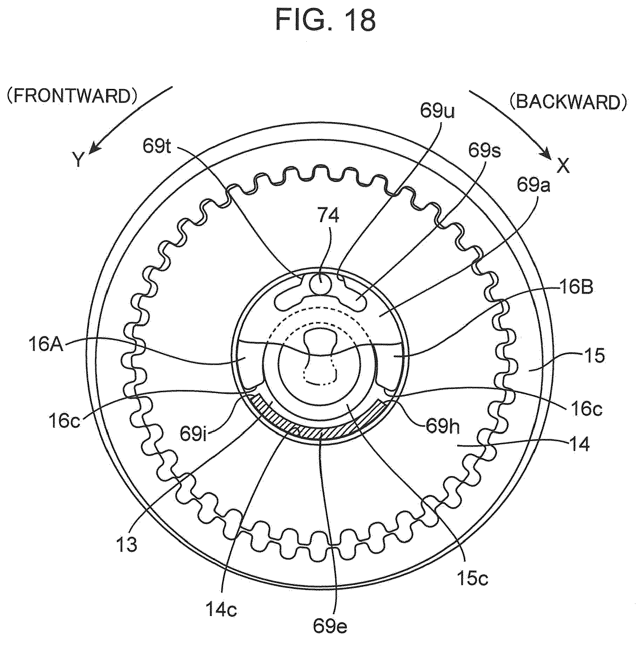

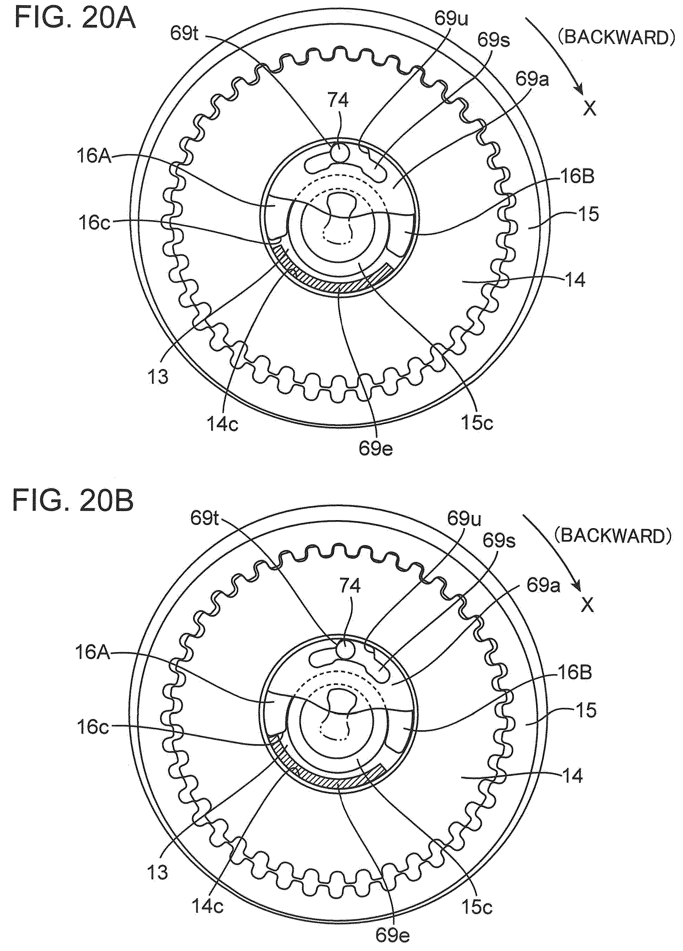

As shown in FIG. 18, the distance from the first wall 69t of the cut-out 69s to the roller 74 is set smaller than the distance from the end 69i in the specified direction X of the protrusion 69e (one end closer to the wedge member 16A) to the distal end 16c of the wedge member 16A. Therefore, when the operation member 69 is rotated in the specified direction X by the operation shaft 20, the first wall 69t of the cut-out 69s first abuts on the roller 74, after which the protrusion 69e abuts on the distal end 16c of the wedge member 16A, as shown in FIGS. 20A and 20B. Thus, in this embodiment, the protrusion 69e, cut-out 69s, and roller 74 are positioned such that, when the operation member 69 is rotated in the specified direction X, the first wall 69t of the cut-out 69s abuts on the roller 74 before the protrusion 69e abuts on the wedge member 16A.

The distance from the end 69h in the counter direction Y of the protrusion 69e (one end closer to the wedge member 16B) to the distal end 16c of the wedge member 16B is set smaller than the distance from the second wall 69u of the cut-out 69s to the roller 74. Therefore, when the operation member 69 is rotated in the counter direction Y by the operation shaft 20, the protrusion 69e first abuts on the distal end 16c of the wedge member 16B, after which the second wall 69u of the cut-out 69s abuts on the roller 74, as shown in FIGS. 21A and 21B. Thus, in this embodiment, the protrusion 69e, cut-out 69s, and roller 74 are positioned such that, when the operation member 69 is rotated in the counter direction Y, the second wall 69u of the cut-out 69s abuts on the roller 74 after the protrusion 69e has abutted on the wedge member 16B.

As described above, according to the second embodiment of the present invention, when a rotational force is applied in the specified direction X to the second bracket 3 in accordance with the force applied to the seat back 53 in the backward tilting direction, the roller 74 provided inside the eccentric cavity 13 abuts on the surrounding surface of the large-diameter hole 14c, whereby rotation of the second bracket 3 in the specified direction X is stopped. In this way, rotation of the second bracket 3 is stopped only by providing the roller 74 in the eccentric cavity 13, so that gradual displacement of the seat back 53 in the backward tilting direction is prevented with a very simple and low-cost structure.

Since the roller 74 is provided inside the cut-out 69s formed in the base part 69a of the operation member 69, the position of the roller 74 can be correctly controlled as it is linked with the rotation of the operation member 69.

For example, as shown in FIGS. 20A and 20B, when the operation member 69 is rotated in the specified direction X, the first wall 69t of the cut-out 69s abuts on the roller 74 before the protrusion 69e abuts on the distal end 16c of the wedge member 16A. Therefore, the wedge member 16A is pushed after the rotation lock by the roller 74 has been released, so that the operation member 69 can be rotated smoothly in the specified direction X, meaning that the seat back 53 can be displaced backward without any hindrance.

When the operation member 69 is rotated in the counter direction Y, as shown in FIGS. 21A and 21B, the second wall 69u of the cut-out 69s abuts on the roller 74 after the protrusion 69e has abutted on the distal end 16c of the wedge member 16B. Therefore, the roller 74 moves after the rotation lock by the wedge member 16B has been released, so that the operation member 69 can be rotated smoothly in the counter direction Y, meaning that the seat back 53 can be displaced forward without any hindrance.

In the second embodiment described above, when the vehicle is going uphill, for example, the vehicle seat 51 is tilted down backward. In this state, there is a possibility that the roller 74 may roll in the specified direction X in which it will move away from the slope 16f of the wedge member 16A. If the roller 74 rolls in this direction, it will no longer contact the surrounding surface of the large-diameter hole 14c, and cannot effectively function as a lock.

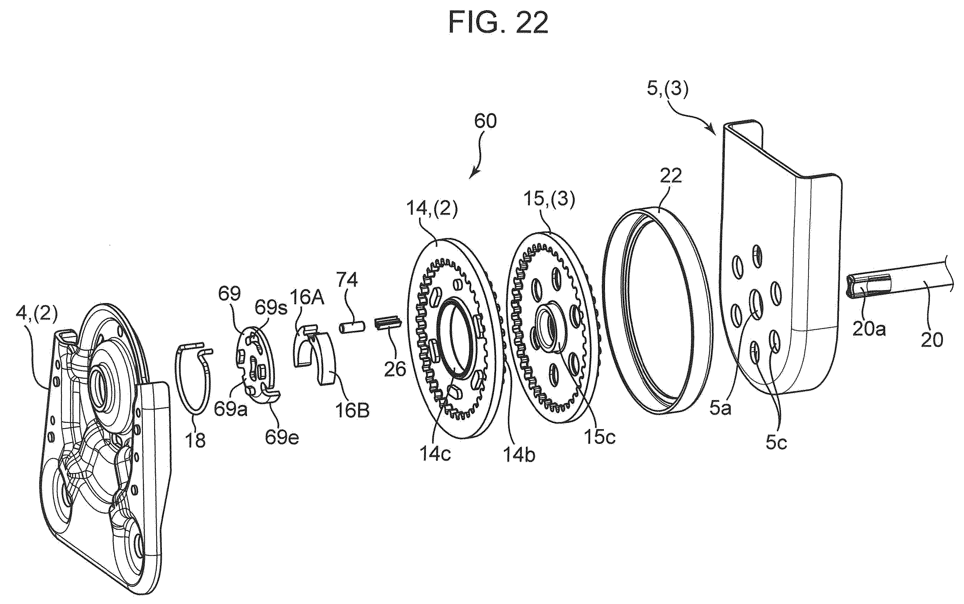

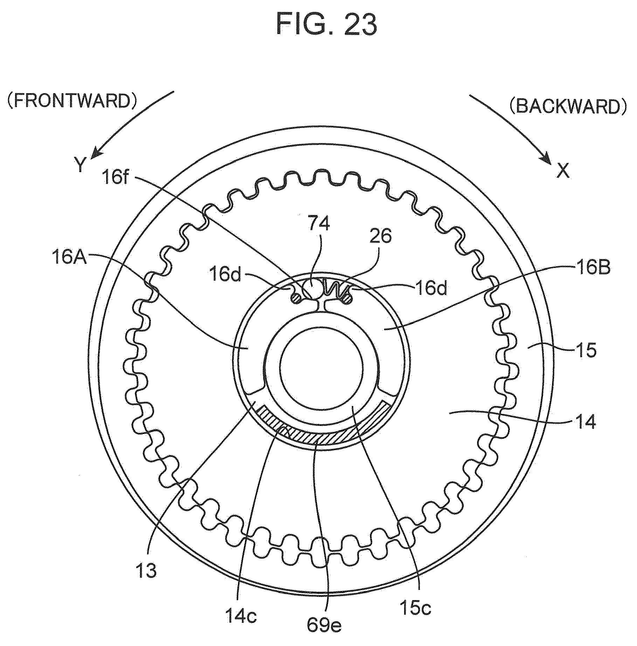

Therefore, as a variation example, as shown in FIG. 22 and FIG. 23, a biasing spring 26 may be provided between the base end 16d of the wedge member 16B located on one side in the specified direction X of the roller 74 and the roller 74. This biasing spring 26 is a W-shaped plate spring and provided to urge the roller 74 in the counter direction Y, i.e., in the direction in which the roller 74 is pressed against the slope 16f of the wedge member 16A.

With such a configuration, the biasing spring 26 keeps the roller 74 pressed against the slope 16f of the wedge member 16A, so that, even when the vehicle seat 51 is oriented to lean down backward, the second bracket 3 is reliably prevented from rotating in the specified direction X by the roller 74, which prevents gradual backward displacement of the seat back 53 more effectively.

## Claims

1. A reclining device, comprising:
a first bracket (2) fixed to a seat cushion (52) and having a predetermined number of outer teeth (14b) and a circular large-diameter hole (14c) concentric with the outer teeth (14b);
a second bracket (3) fixed to a seat back (53), and having inner teeth (15b) in a larger number than the outer teeth (14b) to partially mesh with the outer teeth (14b) and a small-diameter shaft (15c) concentric with the inner teeth (15b) and fitted in the larger-diameter hole (14c);
a restriction member (16A, 16B) that restricts rotation of the second bracket (3) in a specified direction (X) and a counter direction (Y), with the specified direction (X) being a direction in which the second bracket (3) rotates relative to the first bracket (2) when the seat back (53) is tilted backward and the counter direction (Y) being a direction in which the rotation opposite thereto is implemented;
an operation member (69) releasing the second bracket (3) from restriction by the restriction member (16A, 16B) and allowing the second bracket (3) to rotate in the specified direction (X) or counter direction (Y), thereby adjusting an attachment angle of the second bracket (3) relative to the first bracket (2); and
a rolling member (74) provided in an eccentric cavity (13), the eccentric cavity (13) being formed to have an uneven radial gap between a surrounding surface of the large-diameter hole (14c) of the first bracket (2) and an outer circumferential surface of the small-diameter shaft (15c) of the second bracket (3), wherein
the restriction member is a pair of wedge members (16A, 16B) provided at two circumferential locations in the eccentric cavity (13), with a spring member (18) being engaged with the pair of wedge members (16A, 16B) to urge both wedge members (16A, 16B) in biting directions (f),
the operation member (69) includes a base part (69a) formed with a cut-out (69s) for accommodating the rolling member (74), and a protrusion (69e) protruding from the base part (69a) and arranged between ends (16c) in the biting directions (f) of the pair of wedge members (16A, 16B),
the operation member (69) pushing, by the protrusion (69e), the pair of wedge members (16A, 16B) and the spring member (18) in the specified direction (X) or counter direction (Y) to impart an eccentric motion to the small-diameter shaft (15c) in the large-diameter hole (14c) and to change a mating position between the outer teeth (14b) and inner teeth (15b),
thereby adjusting the attachment angle of the second bracket (3),
**characterised in that**
the cut-out (69s) has a circumferential wall formed with a first wall (69t) pushing the rolling member (74) in the specified direction (X) when the operation member (69) is rotated in the specified direction (X), and a second wall (69u) pushing the rolling member (74) in the counter direction (Y) when the operation member (69) is rotated in the counter direction (Y),
wherein
at least one (16A) of the pair of wedge members located closer to an end (69i) in the specified direction (X) of the protrusion (69e) has a slope (16f) at one end (16d) in a loosening direction, and
the rolling member (74) is arranged between ends (16d) in loosening directions of the pair of wedge members (16A, 16B), and is pushed up by the slope (16f) of the wedge member (16A) when a force is applied to the seat back (53) in the backward tilting direction, then pressed against the surrounding surface of the large-diameter hole (14c), thereby stopping rotation of the second bracket (3) in the specified direction (X).

2. The reclining device according to claim 1, wherein
the protrusion (69e), the cut-out (69s), and the rolling member (74) are positioned such that, when the operation member (69) is rotated in the specified direction (X), the first wall (69t) of the cut-out (69s) abuts on the rolling member (74) before the protrusion (69e) abuts on one (16A) of the pair of wedge members, and when the operation member (69) is rotated in the counter direction (Y), the second wall (69u) of the cut-out (69s) abuts on the rolling member (74) after the protrusion (69e) has abutted on the other (16B) of the pair of wedge members.

3. The reclining device according to claim 2, further comprising
a biasing spring (26) provided between the rolling member (74) and one end (16d) of one wedge member (16B) located on one side in the specified direction (X) of the rolling member (74), and urging and pressing the rolling member (74) against the slope (16f).

## Patentansprüche

1. Rücklehnvorrichtung, umfassend:
eine erste Halterung (2), die an einem Sitzpolster (52) befestigt ist und eine vorgegebene Anzahl von Außenzähnen (14b) und ein kreisförmiges Loch (14c) mit großem Durchmesser, konzentrisch mit den Außenzähnen (14b), aufweist;
eine zweite Halterung (3), die an einer Rückenlehne (53) befestigt ist und mit Innenzähnen (15b) in einer größeren Anzahl als die Außenzähne (14b), die teilweise mit den Außenzähnen (14b) kämmen, und einer Welle (15c), konzentrisch mit den Innenzähnen (15b) und die in dem Loch (14c) größeren Durchmessers angeordnet ist;
ein Beschränkungselement (16A, 16B), das eine Drehung der zweiten Halterung (3) in einer gekennzeichneten Richtung (X) und einer Gegenrichtung (Y) einschränkt, wobei die gekennzeichnete Richtung (X) eine Richtung ist, in der sich die zweite Halterung (3) relativ zu der ersten Halterung (2) dreht, wenn die Rückenlehne (53) nach hinten gekippt wird, und die Gegenrichtung (Y) eine Richtung ist, in der die Drehung entgegen gesetzt dazu realisiert wird;
ein Betätigungselement (69), das die zweite Halterung (3) aus einer Beschränkung durch das Beschränkungselement (16A, 16B) löst und ermöglicht, dass sich die zweite Halterung (3) in der gekennzeichneten Richtung (X) oder Gegenrichtung (Y) dreht, wodurch ein Befestigungswinkel der zweiten Halterung (3) relativ zu der ersten Halterung (2) eingestellt wird; und
ein Rollelement (74), das in einem exzentrischen Hohlraum (13) vorgesehen ist, wobei der exzentrische Hohlraum (13) so ausgebildet ist, dass er einen unebenen, radialen Spalt zwischen einer umgebenden Fläche des Lochs (14c) großen Durchmessers der ersten Halterung (2) und einer äußeren Umfangsfläche der Welle (15c) kleinen Durchmessers der zweiten Halterung (3) aufweist, wobei
das Beschränkungselement ein Paar von Keilelementen (16A, 16B) ist, die an zwei Umfangsstellen in dem exzentrischen Hohlraum (13) vorgesehen sind, wobei ein Federelement (18) mit dem Paar von Keilelementen (16A, 16B) in Eingriff gebracht wird, um beide Keilelemente (16A, 16B) in Greifrichtungen (f) zu drücken, wobei das Betätigungselement (69) ein Basisteil (69a) enthält, das mit einem Ausschnitt (69s) zur Aufnahme des Rollelements (74) und einem Vorsprung (69e) ausgebildet ist, der vom Basisteil (69a) hervorsteht und zwischen Enden (16c) in den Greifrichtungen (f) des Keilelementpaars (16A, 16B) angeordnet ist, wobei das Betätigungselement (69) durch den Vorsprung (69e) das Keilelementpaar (16A, 16B) und das Federelement (18) in der gekennzeichneten Richtung (X) oder Gegenrichtung (Y) schiebt, um der Welle (15c) kleinen Durchmessers in dem Loch (14c) großen Durchmessers eine exzentrische Bewegung zu verleihen und eine Anpassungsposition zwischen Außenzähnen (14b) und Innenzähnen (15b) zu ändern, wodurch der Befestigungswinkel der zweiten Halterung (3) eingestellt wird,
**dadurch gekennzeichnet, dass** der Ausschnitt (69s) eine Umfangswand aufweist, die gebildet ist mit einer ersten Wand (69t), die das Rollelement (74) in die gekennzeichnete Richtung (X) schiebt, wenn das Betätigungselement (69) in die gekennzeichnete Richtung (X) gedreht wird,
und einer zweiten Wand (69u), die das Rollelement (74) in die Gegenrichtung (Y) schiebt, wenn das Betätigungselement (69) in die Gegenrichtung (Y) gedreht wird,
wobei mindestens eins (16A) des Keilelementpaares, das näher an einem Ende (69i) in der gekennzeichneten Richtung (X) des Vorsprungs (69e) angeordnet ist, eine Neigung (16f) an einem Ende (16d) in einer Löserichtung aufweist, und
das Rollelement (74) zwischen Enden (16d) in Löserichtungen des Keilelementpaars (16A, 16B) angeordnet ist und durch die Neigung (16f) des Keilelements (16A) nach oben geschoben wird, wenn eine Kraft auf die Rückenlehne (53) in der Kipprichtung nach hinten aufgebracht wird, dann gegen die umgebende Fläche des Lochs (14c) großen Durchmessers gepresst wird, wodurch eine Drehung der zweiten Halterung (3) in der gekennzeichneten Richtung (X) unterbrochen wird.

2. Rücklehnvorrichtung nach Anspruch 1, wobei
der Vorsprung (69e), der Ausschnitt (69s) und das Rollelement (74) so positioniert sind, dass, wenn das Betätigungselement (69) in die gekennzeichnete Richtung (X) gedreht wird, die erste Wand (69t) des Ausschnitts (69s) auf dem Rollelement (74) anstößt, bevor der Vorsprung (69e) auf einem (16A) des Keilelementpaars anstößt, und wenn das Betätigungselement (69) in die Gegenrichtung (Y) gedreht wird, die zweite Wand (69u) des Ausschnitts (69s) auf dem Rollelement (74) anstößt, nachdem der Vorsprung (69e) auf dem anderen (16B) des Keilelementpaars angestoßen ist.

3. Rücklehnvorrichtung nach Anspruch 2, des Weiteren umfassend
eine Vorspannfeder (26), die zwischen dem Rollelement (74) und einem Ende (16d) eines Keilelements (16B), das auf einer Seite in der gekennzeichneten Richtung (X) in des Rollelements (74) vorgesehen ist, und das Rollelement (74) gegen die Neigung (16f) drückt und presst.

## Revendications

1. Dispositif d'inclinaison, comprenant :
une première platine (2) fixée à un coussin de siège (52) et ayant un nombre prédéterminé de dents extérieures (14b) et un trou circulaire de grand diamètre (14c) concentrique avec les dents extérieures (14b) ;
une seconde platine (3) fixée à un dossier de siège (53), et ayant des dents intérieures (15b) en nombre plus grand que les dents extérieures (14b) pour engrener partiellement avec les dents extérieures (14b) et un arbre de petit diamètre (15c) concentrique avec les dents intérieures (15b) et engagé dans le trou de grand diamètre (14c) ;
un élément de restriction (16A, 16B) qui restreint la rotation de la seconde platine (3) dans une direction spécifiée (X) et une direction contraire (Y), dans lequel la direction spécifiée (X) est une direction dans laquelle la seconde platine (3) tourne par rapport à la première platine (2) quand le dossier de siège (53) est basculé vers l'arrière, et la direction contraire (Y) est une direction dans laquelle se produit la rotation opposée à celle-ci ;
un élément d'actionnement (69) qui relâche la seconde platine (3) de la restriction par l'élément de restriction (16A, 16B) et qui permet à la seconde platine (3) de tourner dans la direction spécifiée (X) ou la direction contraire (Y), en ajustant ainsi un angle d'attache de la seconde platine (3) par rapport à la première platine (2) ; et
un élément roulant (74) prévu dans une cavité excentrique (13), la cavité excentrique (13) étant formée pour présenter un intervalle radial inégal entre une surface entourante du trou de grand diamètre (14c) de la première platine (2) et une surface circonférentielle extérieure de l'arbre de petit diamètre (15c) de la seconde platine (3), dans lequel l'élément de restriction est constitué d'une paire d'éléments en coin (16A, 16B) prévus à deux emplacements circonférentiels dans la cavité excentrique (13), avec un élément à ressort (18) engagé avec la paire d'éléments en coin (16A, 16B) pour forcer les deux éléments en coin (16A, 16B) dans des directions de morsure (f),
l'élément d'actionnement (69) inclut une partie de base (69a) formée avec une découpe (69s) pour loger l'élément roulant (74), et une projection (69e) qui se projette depuis la partie de base (69a) et qui est agencée entre des extrémités (16c), dans les directions de morsure (f), de la paire d'éléments en coin (16A, 16B), l'élément d'actionnement (69) poussant, par la projection (69e), la paire d'éléments en coin (16A, 16B) et l'élément à ressort (18) dans la direction spécifiée (X) ou la direction contraire (Y) pour imposer un mouvement excentrique à l'arbre de petit diamètre (15c) dans le trou de grand diamètre (14c) et pour changer une position d'accouplement entre les dents extérieures (14b) et les dents intérieures (15b), en ajustant ainsi l'angle d'attache de la seconde platine (3),
**caractérisé en ce que**
la découpe (69s) a une paroi circonférentielle formée avec une première paroi (69t) qui pousse l'élément roulant (74) dans la direction spécifiée (X) quand l'élément d'actionnement (69) est mis en rotation dans la direction spécifiée (X), et une seconde paroi (69u) qui pousse l'élément roulant (74) dans la direction contraire (Y) quand l'élément d'actionnement (69) est mis en rotation dans la direction contraire (Y),
dans lequel au moins un (16A) de la paire d'éléments en coin placé plus près d'une extrémité (69i) dans la direction spécifiée (X) de la projection (69e) a une pente (16f) à une extrémité (16b) dans une direction de desserrage, et
l'élément roulant (74) est agencé entre des extrémités (16d), dans des directions de desserrage de la paire d'éléments en coin (16A, 16B), et est poussé vers le haut par la pente (16f) de l'élément en coin (16A) quand une force est appliquée au dossier de siège (53) dans la direction de basculement vers l'arrière, et est ensuite pressé contre la surface entourante du trou de grand diamètre (14c), arrêtant ainsi la rotation de la seconde platine (3) dans la direction spécifiée (X).

2. Dispositif d'inclinaison selon la revendication 1, dans lequel la projection (69e), la découpe (69s) et l'élément roulant (74) sont positionnés de telle façon que, quand l'élément d'actionnement (69) est mis en rotation dans la direction spécifiée (X), la première paroi (69t) de la découpe (69s) vient buter sur l'élément roulant (74) avant que la projection (69e) vienne buter sur l'un (16A) de la paire d'éléments en coin et, quand l'élément d'actionnement (69) est mis en rotation dans la direction contraire (Y), la seconde paroi (69u) de la découpe (69s) vient buter sur l'élément roulant (74) après que la projection (69e) soit venue en butée sur l'autre (16B) de la paire d'éléments en coin.

3. Dispositif d'inclinaison selon la revendication 2, comprenant en outre un ressort de sollicitation (26) prévu entre l'élément roulant (74) et une extrémité (16d) d'un élément en coin (16B) situé sur un côté dans la direction spécifiée (X) de l'élément roulant (74), et forçant et pressant l'élément roulant (74) contre la pente (16f).
